# FASCICULE DE BREVET EUROPEEN

(11) **EP 1 435 742 B1**
(45) Date de publication et mention de la délivrance du brevet: **03.08.2005**
(21) Numéro de dépôt: 03104038.9
(22) Date de dépôt: 31.10.2003
(51) Int. Cl.: H04Q 7/22, H04L 29/06

(54) **Procédé et dispositif de diffusion de contenus multimédia à des terminaux mobiles**
System und Verfahren zur Übertragung von Multimediainhalten zu mobilen Endgeräten
Method and device for broadcasting multimedia contents to mobile terminals

(30) Priorité: 31.12.2002 FR 0216931
(43) Date de publication de la demande: 07.07.2004
(73) Titulaire: Société Française du Radiotéléphone-SFR, 75008 Paris (FR)
(72) Inventeur: Bensimon, Michael, 38100 Grenoble (FR); Giraud-Sauveur, Christophe, 38330 Montbonnot Saint-Martin (FR); Guinet, Fabien, 38340 Pommiers la Placette (FR); Vignaud, Frédéric, 38700 Le Sappey en Chartreuse (FR)
(74) Mandataire: Schmit, Christian Norbert Marie

(56) Documents cités:
- WO-A-01/86462
- WO-A-01/89171

## Description

L'invention a pour objet un procédé, et un dispositif, de diffusion de contenus multimédia à des terminaux mobiles. Le domaine de l'invention est celui de la téléphonie mobile. Plus particulièrement le domaine de l'invention est celui de la diffusion de contenus multimédia via un réseau de téléphonie mobile. Par diffusion on entend une transmission point multipoints, c'est-à-dire une transmission d'un serveur vers plusieurs terminaux, ladite transmission portant sur le même contenu. Un example de diffusion de message se trouve dans WO 0189171.

Un but de l'invention est de permettre la diffusion d'un contenu multimédia identique à plusieurs terminaux multimédia mobile.

Un autre but de l'invention est de s'affranchir de la connaissance d'un identifiant des destinataires d'une diffusion pour réaliser cette diffusion.

Un autre but de l'invention est de réaliser une diffusion de contenus multimédia basée sur la localisation géographique des terminaux mobiles destinataires de la diffusion.

Un autre but de l'invention est de réduire des coûts liés à la localisation de terminaux mobiles.

Dans l'état de la technique le principe de diffusion de contenus multimédia est basé sur un mode d'adressage, qu'il soit par adresse électronique de type adresse e-mail, ou par numéro de téléphone aussi connu sous le nom de MSISDN (Mobile Station ISND number, c'est-à-dire numéro international d'un abonné mobile). Dans l'état de la technique, il est donc nécessaire de connaître des adresses, au sens d'identifiants publiques, des destinataires de la diffusion. Ces adresses sont obtenues soit par une collecte de longue haleine au cours d'une prospection réalisée dans ce but, soit ces adresses sont obtenues par l'achat d'un fichier d'adresses. Une fois une liste d'adresses constituée, il est possible d'émettre vers chacune de ces adresses un contenu multimédia, et donc de réaliser une diffusion.

Dans l'état de la technique on peut aussi, à partir de la liste d'adresses essayer de cibler géographiquement la diffusion. Pour se faire il faut alors effectuer une demande de localisation pour chaque adresse de la liste. Cette localisation permet de sélectionner les adresses correspondant à la zone géographique que l'on souhaite cibler. Il est alors possible d'envoyer un contenu multimédia aux seules adresses localisées dans la zone choisie.

Cette solution pour réaliser une diffusion localisée géographiquement est complexe et implique au moins trois étapes distinctes quoi sont: collecte d'adresses, localisations, et enfin émissions de message. Cette solution offre de plus de bien piètres résultats en terme de couverture géographique. En effet, rien ne garantit que la liste d'adresses collectée comporte des adresses dont les porteurs sont situés dans la zone géographique ciblée. Ainsi il est possible que la solution de l'état de la technique aboutisse en fait à une non diffusion du fait de l'absence de cible dans la zone géographique ciblée.

Dans une variante de l'état de la technique il est possible de détecter l'arrivée dans une zone géographique d'un terminal identifié par une adresse. Cette détection peut alors servir à déclencher l'émission d'un contenu multimédia vers ce terminal. Cependant cette solution est complexe car elle impose un suivi permanent des terminaux afin de pouvoir détecter leur pénétration dans telle ou telle zone géographique. Là encore les performances sont médiocres car déterminées par une liste d'adresses et conditionnées par le suivi géographique des terminaux associés à cette liste.

Ainsi les solutions de l'état de la technique sont d'une part coûteuses, que se soit par le nombre d'étapes nécessaires ou par leur complexité, et d'autre part peu performantes.

Dans l'invention on résout ces problèmes en utilisant des spécificités des réseaux de téléphonie mobile. Dans l'invention, ces spécificités sont mises en oeuvre par un serveur de diffusion de contenus multimédia connecté au réseau de téléphonie sur lequel on souhaite effectuer une diffusion de contenus multimédia. Ce serveur de diffusion est doté d'au moins deux interfaces permettant de s'y connecter, et de fonctions de diffusion. Une première interface permet à un diffuseur de contenus multimédia de configurer le serveur de diffusion. Cette configuration se fait par la désignation d'une zone géographique, et par la fourniture d'un contenu multimédia à diffuser dans cette zone. Cette association d'un contenu à une zone géographique est ici appelée un service qui est identifié par un identifiant de service. Cet identifiant de service permet au diffuseur de modifier la configuration du serveur de diffusion pour ce qui concerne ce service. Une modification est, par exemple, une modification de la zone géographique, une modification du contenu multimédia, une suppression du service.

Une deuxième interface permet à un appareil cible de la diffusion de récupérer le contenu multimédia. Cette récupération peut se faire soit via une interface WAP (Wireless Application Protocol, c'est-à-dire protocole pour les applications sans fil), soit par une interface HTTP (Hyper Text Transfer Protocol, soit protocôle de transmission hypertexte), soit par n'importe quelle interface basée sur TCP/IP, soit par un rappel au cours duquel a lieu la diffusion du contenu multimédia.

La diffusion du contenu multimédia est réalisée par le serveur de diffusion qui utilise une technologie SMS-CB (Short Message Service - Cell Broadcast, c'est-à-dire service de diffusion de messages courts dans une cellule). La technologie SMS-CB est définie dans la phase 2 de la norme GSM et plus particulièrement dans le document GSM 03.49. Le serveur de diffusion produit un message court de diffusion comportant au moins une information permettant d'identifier sur le serveur de diffusion un contenu multimédia. Le serveur détermine les cellules du réseau de téléphonie incluses dans la zone géographique ciblée. Enfin, le serveur diffuse au cellules déterminées le message en utilisant la technologie SMS-CB, ce qui a pour effet que tous les terminaux connectés aux cellules déterminées reçoivent le message court produit. Sur chaque terminal le message court est interprété ce qui provoque la récupération du contenu multimédia par le terminal.

On obtient ainsi une diffusion à tous les terminaux d'une zone géographique

L'invention a donc pour objet un procédé de diffusion de contenus multimédia à des terminaux mobiles caractérisé en ce qu'un serveur de diffusion de contenus multimédia met en oeuvre les étapes suivantes:
- stockage dans une mémoire de contenus d'au moins un contenu multimédia,
- attribution d'un identifiant de service à chaque contenu multimédia stocké,
- association à chaque identifiant de service d'au moins un identifiant d'une zone géographique,
- pour un contenu multimédia, production (307) d'au moins un message de diffusion, et diffusion de ce message à la zone géographique associée au contenu multimédia, le message court de diffusion comportant un identifiant/adresse associé au contenu multimédia, et l'identifiant de service.

L'invention a aussi pour objet un dispositif de diffusion de contenus multimédia à des terminaux mobile caractérisé en ce qu'il comporte:
- des moyens pour enregistrer au moins un contenu multimédia à diffuser,
- des moyens pour associer un identifiant de service à chaque contenu multimédia stocké,
- des moyens pour associer à chaque identifiant de service au moins un identifiant d'une zone géographique,
- des moyens pour diffuser des messages courts de diffusion au sein d'une zone géographique associée au contenu multimédia, un message court de diffusion comportant un identifiant/adresse associé au contenu multimédia, et l'identifiant de service,
- des moyens pour émettre des messages courts de diffusion produits.

L'invention sera mieux comprise à la lecture de la description qui suit et à l'examen des figures qui l'accompagnent. Celles-ci sont présentées à titre indicatif et nullement limitatif de l'invention. Les figures montrent:
Figure 1: une illustration de moyens permettant la mise en oeuvre du procédé selon l'invention.
Figure 2: une illustration synthétique du procédé selon l'invention.
Figure 3: une illustration d'étapes du procédé selon l'invention.
Figure 4: une illustration schématique du contenu de messages échangés durant le mise en oeuvre du procédé selon l'invention.

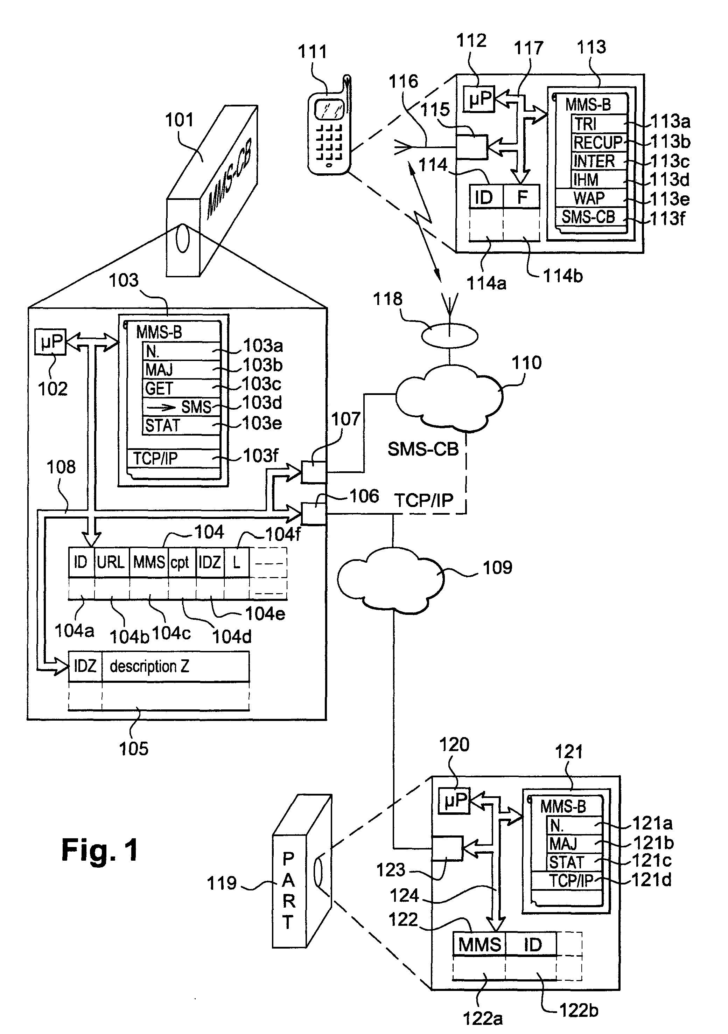

La figure 1 montre un serveur 101 de diffusion comportant des moyens pour mettre en oeuvre des étapes du procédé selon l'invention. Le serveur 101 comporte un microprocesseur 102, une mémoire 103 de programme, une mémoire 104 de contenus multimédia, une mémoire 105 de description de zones géographiques, des circuits 106 interface avec un réseau 109 de type Internet, et des circuits 107 interface avec un réseau 110 de téléphonie mobile. Les éléments 102 à 107 sont connectés via un bus 108. Le microprocesseur 102 effectue des actions qui correspondent à l'exécution de codes instruction enregistrés dans la mémoire 103. Lorsque l'on prête une action au serveur 101, celle-ci est réalisée par le microprocesseur 102. D'une manière générale lorsque l'on prête une action a un appareil, cette action est réalisée par un microprocesseur de cet appareil commandé par des codes instruction d'une mémoire de programmes de cet appareil.

La représentation de la figure 1 fait apparaître plusieurs mémoires pour un appareil. Ce choix a été fait dans un souci de clarté. Dans la pratique les informations correspondant à ces mémoires peuvent être enregistrées via un seul composant, comme elles peuvent être enregistrées sur plusieurs composants.

La mémoire 103 est divisée en plusieurs zones pour illustrer les différentes fonctions du serveur 101. Seules des zones en rapport direct avec l'invention sont représentées, la mémoire 103 comportant évidemment d'autres zones. Il en est de même pour les autres mémoires de programmes décrites par la suite.

La mémoire 103 comporte une zone pour la gestion de la diffusion de contenus multimédia. Une zone d'une mémoire de programme comporte des codes instruction pour la réalisation d'une fonction par un microprocesseur. Une zone 103a correspond à la création d'un nouveau service/contenu multimédia dans la mémoire 104. Une zone 103b correspond à la mise à jour d'un contenu multimédia dans la mémoire 104, une mise à jour étant une modification ou une suppression. Une zone 103c correspond au traitement d'une requête de récupération d'un contenu multimédia par un terminal mobile se connectant au serveur 101. Une zone 103d correspond à la gestion de messages courts de diffusion (ou message SMS-CB), une zone 103e correspond à la gestion d'une connexion avec un serveur d'un diffuseur de contenus multimédia cherchant, par exemple, à récupérer des statistiques concernant l'accès à des contenus multimédia enregistrés dans la mémoire 104. Une zone 103f correspond à la gestion de communications selon le protocole TCP/IP (Transfert Control Protocol/Internet Protocol - Protocole de contrôle d'un transfert/ Protocole Internet).

La mémoire 104 est structurée en table, chaque ligne correspondant à un service/contenu multimédia, chaque colonne correspondant à une caractéristique du composant multimédia. Une colonne 104a permet d'enregistrer un identifiant du contenu multimédia, le contenu d'une case de la colonne 104a est aussi appelé identifiant de service. Une colonne 104b permet d'enregistrer une adresse publique du contenu multimédia. Une colonne 104c permet d'enregistrer un contenu multimédia. Un contenu multimédia peut être du texte, une image, du son, un film, un message MMS (Multimedia Message Service, pour Service de message multimédia), un fichier voiceXML (langage de type XML pour la transmission de la voix), et/ou un fichier à un format de type HTML (Hypertext Markup Language, pour langage de balisage hypertext), la liste n'est pas exhaustive. Une colonne 104d permet d'enregistrer un compteur d'accès au contenu multimédia. Une colonne 104e permet d'enregistrer un identifiant d'une zone géographique ou adresse de zone. Une colonne 104f permet d'enregistrer une liste d'identifiants de clients ayant accédé au contenu multimédia. On note que les colonnes 104d et 104f correspondent à des statistiques sur les contenus multimédia et sont des perfectionnement de l'invention. La mémoire 104 comporte encore d'autres colonnes permettant notamment d'enregistrer, par exemple, une fréquence de diffusion, et/ou une durée de vie pour un contenu multimédia. La mémoire 104 permet d'enregistrer autant de services/contenus multimédia qu'il est requis par l'entité mettant en oeuvre le serveur 101. Dans une variante, le champ 104e permet d'enregistrer une liste d'identifiants de zone géographique.

La mémoire 105 permet d'associer une adresse d'une zone géographique, enregistrée dans une colonne 105a, à une description de cette zone. Dans une variante l'adresse de zone suffit à un réseau de téléphonie mobile pour router correctement un message court de diffusion. Un message court de diffusion est un message émis selon la technologie SMS-CB précitée. Dans une autre variante une description d'une zone géographique est associée à une liste d'identifiants de BSC (Base Station Controller, pour contrôleur de stations de base), et/ou à une liste d'identifiants de BTS (Base Transceiver Station, pour station de base) du réseau de téléphonie sur lequel on réalise la diffusion. Dans l'invention une zone géographique est en effet définie par un ensemble de BTS. On rappelle ici qu'un BSC commande plusieurs BTS, une liste de BSC correspond donc bien à une liste de BTS. Dans le cas où une adresse de zone suffit au réseau de téléphonie, la mémoire 105 est facultative.

Les circuits 107 sont une interface entre les signaux du réseau 110 de téléphonie et le serveur 101. Les circuits 106 sont une interface entre les signaux du réseau 109 et le serveur 101.

La figure 1 montre un terminal 111 mobile. Un terminal mobile est, dans un exemple préféré, un téléphone mobile. Dans des variantes il s'agit aussi d'un assistant personnel, d'un ordinateur de poche, d'un ordinateur portable, la liste n'est pas exhaustive. Le terminal 111 comporte un microprocesseur 112, une mémoire 113 de programmes, une mémoire 114 de filtrage, et des circuits 115 interface avec une antenne 116. Les éléments 112 à 115 sont connectés via un bus 117. L'antenne 116 permet d'établir une connexion hertzienne avec une station 118 de base du réseau 110.

La mémoire 113 comporte une zone 113a correspondant au tri de messages courts. Une zone 113b correspond à la récupération d'un contenu multimédia. Une zone 113c correspond à l'interprétation d'un contenu multimédia. Une zone 113d correspond à une Interface Homme Machine (IHM) permettant à un utilisateur du terminal 111 de configurer le contenu de la mémoire 114. Une zone 113e correspond à la mise en oeuvre d'un mode WAP. Une zone 113f correspond à la gestion des messages SMS-CB.

La mémoire 114 comporte au moins 2 colonnes. Un colonne 114a permet d'enregistrer un identifiant de service. Une colonne 114b permet de spécifier si les messages courts correspondant à un service doivent être traités ou rejeté/ignoré par le terminal 111. Le contenu de cette zone mémoire peut être édité par l'utilisateur du terminal 111 afin de modifier le comportement du terminal 111 lorsqu'il filtre des messages courts de diffusion.

Dans la pratique les zones 113a à 113d, 113f, ainsi que la mémoire 114 sont une amélioration du comportement d'un terminal mobile. Les codes instruction de ces améliorations sont soit téléchargés dans la mémoire 113 de programme, soit préenregistrés dans la mémoire 113, soit présents dans la puce d'une carte SIM-Toolkit qui est insérée dans le terminal 111.

La figure 1 montre aussi un serveur 119 d'un partenaire de l'opérateur de téléphonie, ou autre entité, gérant le serveur 101. Le serveur 119 comporte un microprocesseur 120, une mémoire 121 de programme, une mémoire 122 de contenus multimédia, et des circuits 123 d'interface avec le réseau 109. Les éléments 120 à 123 sont connectés via un bus 124.

La mémoire 121 comporte une zone 121a correspondant à la production d'un nouveau message multimédia. Une zone 121b correspond à la mise à jour par le serveur 119 d'un contenu multimédia de la mémoire 104. Une zone 121c correspond à la récupération de statistiques sur un message multimédia.

La mémoire 122 comporte au moins 2 colonnes, une colonne 122a permet d'enregistrer un contenu multimédia, une colonne 122b permet d'associer à un contenu multimédia un identifiant de service. Dans une variante, la mémoire 122 comporte d'autres colonnes permettant d'enregistrer des paramètres de diffusion pour un contenu multimédia. De tels paramètres sont, par exemple, une fréquence et ou une durée de vie.

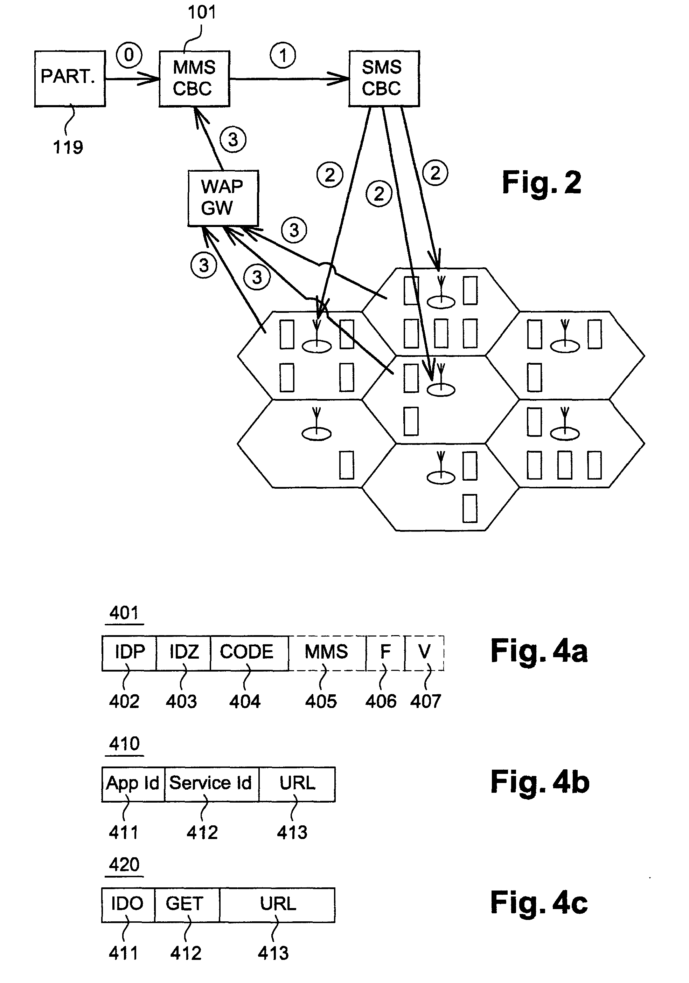

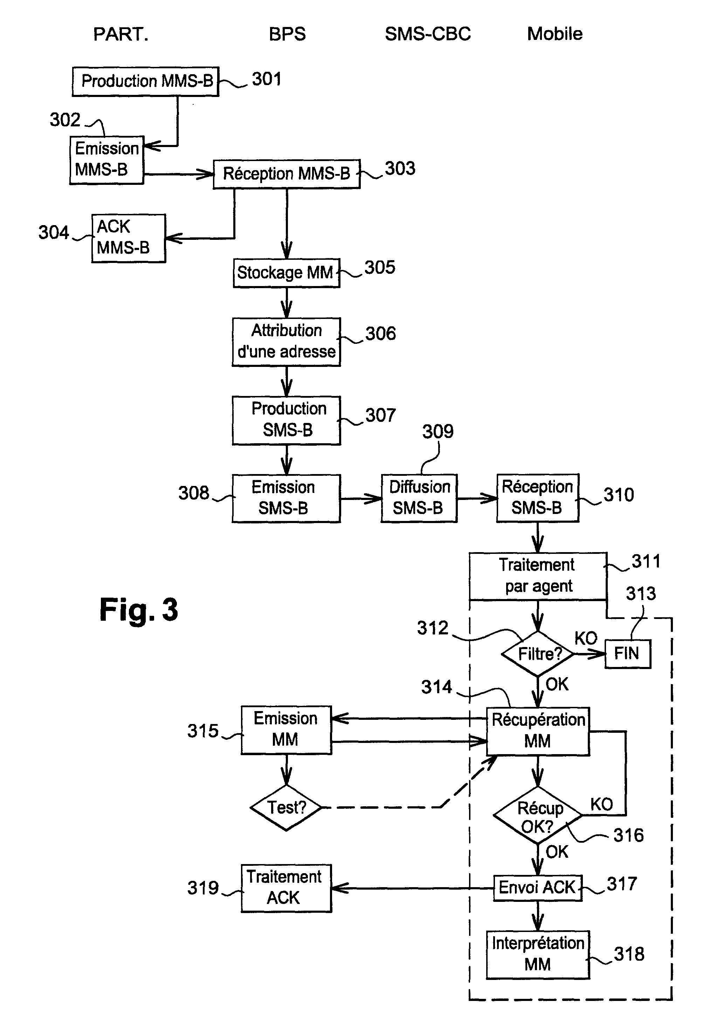

La figure 2 montre que le serveur 119, dans une étape préliminaire 0, émet vers le serveur 101 un contenu multimédia que l'entité contrôlant le serveur 119 souhaite diffuser sur le réseau de téléphonie de l'entité contrôlant le serveur 101. L'étape 0 est une étape de configuration du serveur 101 par le serveur 119, ou par un appareil équivalent au serveur 119.

La figure 3 montre une étape 301 dans laquelle le serveur 119 produit un message de configuration d'une diffusion d'un contenu multimédia. Le contenu d'un tel message de configuration est illustré par la figure 4a. La figure 4a montre qu'un message 401 de configuration d'une diffusion multimédia comporte un champ 402 d'identification du partenaire émettant le message 401. Le message 401 comporte aussi un identifiant 403 d'une zone géographique, il s'agit d'une adresse de zone géographique. Le message 401 comporte aussi un code 404 instruction permettant de définir la finalité du message. Le code 404 instruction est, par exemple, un code de création, un code de modification, ou un code de suppression d'un service/contenu multimédia. Si le code 404 est un code de mise à jour d'un contenu multimédia, alors le code 404 comporte aussi une partie permettant d'identifier le contenu multimédia à mettre à jour. Cette partie correspond à un identifiant de service. Selon la nature du code 404 instruction, le message 401 comporte d'autres champs. Si le message 401 est un message de création d'un contenu multimédia, alors le message 401 comporte un champ 405 comportant un contenu multimédia, un champ 406 comportant une fréquence de diffusion pour le contenu multimédia, et/ou un champ 407 comportant une durée de vie d'un message multimédia. Une durée de vie est dans ce cas la période pendant laquelle le contenu multimédia doit être diffusé.

Dans l'étape 301 le serveur 119 produit un message tel que le message 401. On passe alors à une étape 302 d'émission du message 401 de configuration produit à l'étape 301. Ce message est émis à destination du serveur 101 via, par exemple, le protocole TCP/IP, c'est-à-dire via le réseau Internet. Dans une variante le message 401 est chiffrée. Dans une autre variante, un équivalent du message 401 est composé en ligne. Une composition en ligne est réalisée, par exemple, via un formulaire tel que ceux prévu dans le langage HTML. Dans ce cas le serveur 101 se comporte, vu du serveur 119, comme un serveur HTTP. Dans cette autre variante on peut mettre en oeuvre une identification et/ou une connexion sécurisée. Les méthodes pour faire parvenir les informations correspondant au message 401 au serveur 101 sont donc nombreuses.

De l'étape 302 on passe à une étape 303 de réception du message 401 de configuration par le serveur 101. Dans l'étape 303 le serveur 101 met à jour le contenu de la mémoire 104 en fonction du contenu du message 401, et plus particulièrement du code 404 instruction. Dans tous les cas le serveur 101 vérifie si l'identifiant 402 est bien compatible avec l'opération décrite par le message 401. En d'autre termes il faut que l'émetteur du message 401 soit autorisé a effectuer cette opération. Cette vérification se fait, par exemple par un parcours d'une mémoire d'autorisation dans laquelle sont enregistrés les droits des partenaires de l'entité gérant le serveur 101. Cette mémoire d'autorisation n'est pas représentée.

Si le message 401 est un message de configuration pour la création d'un nouveau contenu multimédia alors le serveur 101 enregistre dans la mémoire 104 une nouvelle ligne correspondant à un nouveau contenu multimédia. Les informations contenues dans le message 401 sont alors transférées dans cette nouvelle ligne. Le serveur 101 affecte aussi à cette nouvelle ligne une valeur pour la colonne 104a et une valeur pour la colonne 104b, c'est une étape 306 d'attribution d'adresse. En particulier le contenu du champ 405 est transféré dans la colonne 104c de la nouvelle ligne, c'est l'étape 305. Les étape 305 et 306 suivent l'étape 303 dans un ordre quelconque. Les étapes 305 et 306 sont en fait des sous-étapes de l'étape 403. Elles sont représentées en dehors de l'étape 303 pour illustrer le fait que l'on stocke dans une mémoire un contenu multimédia, et que l'on associe à ce contenu multimédia un identifiant/adresse. Les champs de statistiques de cette nouvelle ligne sont initialisés à zéro et à une liste vide selon le champ considéré. Le serveur 101 produit ensuite un message d'acquittement comportant au moins la valeur produite pour la colonne 104a, c'est-à-dire un identifiant de service. Si l'opération de création n'a pas pu être effectuée, le message d'acquittement comporte simplement un code d'erreur.

Dans l'étape 306 le serveur 101 associe un identifiant 104a de service et une adresse 104b. Dans la pratique, il est possible d'associer à un même identifiant de service plusieurs adresses, et donc plusieurs contenus multimédia. Cette multi-association est réalisée en multipliant le nombre de lignes dans la mémoire 104. Il est ainsi possible que la mémoire 104 comporte plusieurs lignes ayant un identifiant de service identique. Dans ce cas ces lignes sont différenciées au moins par le champ adresse 104b. Dans ce cas la détermination d'une ligne de service dans la mémoire 104 requiert la connaissance d'un identifiant de service, et d'une adresse. Pour la suite on considère le cas ou un service correspond à une seule ligne dans la mémoire 104. Lorsque ce n'est pas le cas, il faut comprendre identifiant de service comme étant une information permettant de déterminer une ligne dans la mémoire 101. Une telle information est, par exemple, une association du champ 104a et du champ 104b.

Le contenu de la colonne 104a est produit, par exemple, via un compteur, via l'intervention d'un opérateur, via une génération aléatoire, fixé par un partenaire, ou via une autre méthode.

Le contenu de la colonne 104b est assimilable à une adresse de type URL. Soit cette colonne comporte, pour chaque ligne de la mémoire 104, une adresse URL complète de type:
protocole://domaine/contenu.html
où *protocole* est un protocole (wtp, http, ...) utilisé pour interroger le serveur 101. Dans cette adresse *domaine* est le nom de domaine du serveur 101 sur lequel est enregistré le contenu multimédia à récupérer. Et enfin, *contenu.html* est un identifiant permettant de distingué le contenu multimédia à récupérer parmi ceux de la mémoire 104. Dans une variante seule contenu.html est enregistré dans la colonne 104b, les autres éléments de l'URL étant connu de l'appareil devant récupérer le contenu multimédia, ou étant connu du serveur émettant des messages cours de diffusion. *Contenu.html* est fixé par le serveur 101. Cette fixation est réalisée, par exemple, via un compteur, via l'intervention d'un opérateur, via une génération aléatoire, fixé par un partenaire, ou une autre méthode.

Si le message 401 est un message de configuration pour la mise à jour d'un service/contenu multimédia, le serveur 101 détermine de quel service il s'agit grâce à l'identifiant de service que comporte le champ 404. Une fois la ligne correspondante déterminée dans la mémoire 104, le serveur 101 effectue le mise à jour décrite dans le message 401, via le code instruction 404 et ses éventuels paramètres dans les champs suivants. Il peut s'agir de remplacer le contenu d'une quelconque des colonnes 104c, 104e, ou d'une autre colonne permettant de définir la façon dont sont diffusés les contenus multimédia. En cas de remplacement du contenu d'une ou plusieurs colonnes dans la ligne de la mémoire 104, le message 401 comporte aussi les valeurs de remplacement. A la fin de l'opération, le serveur 101 produit un message d'acquittement indiquant le statut de l'opération de mise à jour suivant qu'elle a abouti ou non. Ce message d'acquittement comporte, dans un exemple préféré, l'identifiant de service de la ligne de la mémoire 104 mise à jour. La mise à jour peut aussi consister à ajouter un contenu multimédia à un service existant. Dans ce cas le message 401 comporte au moins un identifiant de service et un contenu multimédia.

Si le message 401 est un message de récupération de statistiques, le serveur 101 détermine de quel message multimédia il s'agit grâce à l'identifiant de service que comporte le champ 404. Le serveur 101 produit alors en réponse un message de statistiques comportant le contenu des colonnes de cette ligne permettant d'enregistrer les statistiques. Dans notre exemple il s'agit des colonnes 104d, et 104f. Le message de statistiques comporte aussi un identifiant de service indiquant le service auquel les statistiques se rapportent. Par la suite le message de statistiques est traité comme un message d'acquittement.

Dans la pratique un identifiant de service est aussi associé, dans la mémoire 104, à un identifiant de partenaire. Cet identifiant de partenaire n'est pas représenté. Cette association permet au serveur 101 de vérifier que les actions de création et mise à jour sont bien effectuées par un partenaire ayant le droit d'effectuer ces opérations.

Une fois le traitement du message 401 de configuration terminé, et le message d'acquittement produit, ce dernier est émis vers l'entité identifiée par le champ 402 du message 401. On passe alors à une étape 304 de gestion d'un message d'acquittement par le serveur 119.

Dans l'étape 304, le serveur 119 est informé sur le succès ou l'échec du traitement, par le serveur 101, du message produit à l'étape 301. Cela lui permet de mettre à jour le contenu de la mémoire 122. En particulier dans le cas d'un message de configuration pour la création d'un nouveau contenu multimédia, le message d'acquittement comporte le numéro de service qui a été attribué par le serveur 101 à ce nouveau contenu multimédia. Ce numéro de service est alors enregistré dans la mémoire 122 en correspondance avec le contenu multimédia auquel il correspond. C'est la connaissance de ce numéro de service qui permet au serveur 119 d'émettre des messages de configuration de mise à jour et/ou de récupération de statistiques.

Sur la figure 2, de l'étape 0 on passe à une étape 1 de diffusion, par le serveur 101 de contenu multimédia. Sur la figure 3, l'étape 1 commence à l'étape 307 suivant l'étape 303, 305, ou 306.

L'étape 307 peut être déclenchée par plusieurs événements. Un premier événement est la réception d'un message de configuration pour la création d'un nouveau contenu multimédia comme à l'étape 303. Un deuxième événement est lié à un parcours régulier de la mémoire 104 par le serveur 101. Ce parcours a pour but de déterminer quel contenu multimédia doit être diffusé en fonction des caractéristiques des services enregistrés dans la mémoire 104. Les caractéristiques prises en compte lors de ce parcours sont la fréquence de diffusion et la durée de vie. Un troisième événement est la réception d'un message de configuration dont le code 404 correspond à une diffusion immédiate d'un contenu multimédia enregistré dans la mémoire 104.

Dans l'étape 307, une fois déterminé le service dont le contenu multimédia doit être diffusé, le serveur 101 produit un, ou plusieurs message SMS-CB, ou message court de diffusion. La quantité de messages SMS-CB requis pour la diffusion du contenu multimédia d'un service dépend du mode d'adressage existant sur le réseau de téléphonie sur lequel est réalisée la diffusion. On a déjà dit que dans l'invention une zone géographique est un ensemble de BSC et/ou de BTS. Soit le réseau de téléphonie mobile reconnaît un identifiant de zone regroupant par son appelation/identification des BSC et/ou des BTS. Dans ce cas le simple fait d'émettre un message SMS-CB à destination de cet identifiant de zone suffit à assurer la diffusion du message court dans la zone. Il est aussi possible d'envoyer un SMS-CB à chaque BSC et/ou BTS définissant la zone. Dans ce cas il faut traduire l'identifiant de zone de la colonne 104e en une liste d'identifiants de BSC et ou BTS. Cette traduction est alors assurée par le serveur 101 via la mémoire 105. Dans les deux cas le serveur 101 produit un message court de diffusion pour la zone géographique associée au service.

Un message court de diffusion produit à l'étape 307 comporte au moins les informations illustrées par la figure 4b. La figure 4b montre un message 410 court de diffusion comportant un champ 411 identifiant de l'application à laquelle est destinée le message 410. Le message 410 comporte aussi un champ 412 identifiant d'un service et un champ 413 d'adresse d'un contenu multimédia. Dans une variante de l'invention le message 410 ne comporte pas de champ 413, le contenu du champ 412 suffisant à produire une adresse de type URL (Universal Resource Locator, pour adresse universelle de ressource). Cela est tout à fait compatible avec la technologie SMS-CB qui permet de diffuser des messages d'une longueur pouvant aller jusqu'à 93 x 15 caractères.

Le message 410 est inséré dans le nombre requis de messages SMS-CB, pour couvrir la zone correspondant au service en cours de traitement par le serveur 101. Chaque message SMS-CB produit a une adresse de destination que cette dernière soit une adresse de zone ou, dans le deuxième cas, une adresse d'une BSC ou BTS.

De l'étape 307 on passe à une étape 308 dans laquelle le serveur 101 émet les messages courts de diffusion produits dans l'étape 307. Ces messages sont émis selon la technologie SMS-CB. Cette diffusion correspond à l'étape 2 sur la figure 2 et à l'étape 309 sur la figure 3. Cette étape de diffusion d'un message court est connu, on ne rappelle que les grands principes. Les messages émis à l'étape 308 sont routés à travers le réseau 110 de téléphonie jusqu'aux équipements destinataires (BSC et/ou BTS) de ce réseau. Ces équipements assurent alors la diffusion du message court de diffusion à tous les terminaux qui leurs sont connectés au moment de la diffusion. Dans la pratique le serveur 101 est connecté au réseau 110 via une interface compatible avec la technologie SMS-CB de manière à pouvoir communiquer avec un serveur SMS-CBC (SMS-CB Center, pour central SMS-CB) du réseau 110. Dans une variante le serveur 101 communique avec le serveur SMS-CBC via une interface TCP/IP et donc via un réseau de type Internet. La figure 2 illustre aussi qu'une zone géographique est définie par un certain nombre de cellules d'un réseau de téléphonie cellulaire. Dans l'exemple de la figure 2 la zone géographique est composée de 3 cellules accolées. Dans la pratique il peut s'agir d'un nombre quelconques de cellules, accolées ou non.

De l'étape 309 on passe à une étape 310 de réception d'un message SMS-CB par un terminal mobile. Dans l'étape 309, le terminal mobile accède au contenu du message 410. En particulier il accède au contenu du champ 411 dont la vocation est d'indiquer quel doit être le traitement de ce message 410. Dans notre cas le champ 411 indique quelle est l'application, sur le terminal 111 mobile, destinataire du message 410. Il s'agit dans ce cas de l'application capable de traiter les messages courts de diffusion selon l'invention, cette application est aussi appelée un agent. Cet agent correspond aux codes instruction des zones 113a à 113d.

De l'étape 310 on passe à l'étape 311 dans laquelle le terminal met en oeuvre l'agent permettant le traitement proprement dit du message court de diffusion selon l'invention. Ce traitement commence à l'étape 312 par un filtrage. Ce filtrage est réalisé grâce au contenu du champ 412. Le terminal 111 compare le contenu du champ 412 au contenu de la colonne 114a. Si il trouve une ligne correspondant, c'est-à-dire si le contenu du champ 412 est présent dans la colonne 114a, alors le résultat du filtrage est le contenu de la colonne 114b. La colonne 114b indique si le traitement du message 410 doit se poursuivre au delà de l'étape 312. Si le contenu du champ 412 n'est pas présent dans la colonne 114a, alors on adopte, sur le terminal 111, un comportement par défaut. Ce comportement par défaut est soit une interruption du traitement, soit une poursuite du traitement. Cela est laissé à la discrétion de l'utilisateur du terminal 111 qui peut configurer son téléphone comme il le souhaite.

Si le résultat du filtrage est une interruption, on passe à une étape 313 de fin dans laquelle le terminal revient dans un état similaire à celui qu'il aurait si il n'avait jamais reçu le message 410.

Si le résultat du filtrage est une poursuite du traitement on passe à une étape 314 de récupération du contenu multimédia associé au service désigné par le champ 412 dans le message 410 reçu à l'étape 310. Cela correspond à une étape 3 sur la figure 2. Dans l'étape 314, le terminal 111 produit un message dont le contenu est illustré par la figure 4c. La figure 4c montre qu'une requête 420 de récupération d'un contenu multimédia comporte un champ 421 identifiant de l'émetteur de la requête, un champ 422 code instruction indiquant qu'il s'agit d'une requête de récupération, et un champ 423 identifiant du contenu multimédia à récupérer. LE champ 421 est aussi appelé identifiant de l'origine de la requête.

Le contenu du champ 423 correspond au contenu du champ 413. Si le message 410 ne comporte pas de champ 413, alors le contenu du champ 423 correspond au contenu du champ 412. Le contenu du champ 423 permet d'identifier une ligne dans la mémoire 104.

La récupération peut se faire selon au moins 2 modes. Un premier mode est un mode WAP/GPRS. Dans ce cas la requête 420 est une requête de type GET (récupère), et le contenu du champ 423 est une URL. Dans ce mode l'identifiant 421 est une adresse Internet. Dans ce mode le contenu du champ 423 est une adresse URL, ou une information permettant de reconstituer une URL comme décrit pour les champs de la colonne 104b. Si le champ 413 n'existe pas le terminal 111 produit une adresse URL d'un type:
wtp://domaine_serveur_101?serviceid=contenu_champ_412, ou
wtp://domaine_serveur_101?adresse=contenu_champ_412, ou
wtp://domaine_serveur_101/contenu_champ_412.
Cette liste n'est pas exhaustive, ni le protocole WTP pris comme exemple, ni les noms des éléments de l'adresse. Si le champ 413 existe, soit il contient une URL complète qui est alors reportée dans le champ 423, soit il comporte une information équivalente à un identifiant de service, c'est à dire une information permettant d'identifier de manière certaine une ligne dans la mémoire 104. Cette information permet alors de produire une URL telle que celle qui vient d'être donnée en exemple. C'est le mode GPRS/WAP qui est illustré par la figure 2 qui montre que les terminaux de la zone cible de la diffusion établissent une connexion avec le serveur 101 via une passerelle WAP. Dans ce mode le contenu du champ 423 permet de retrouver une ligne de la mémoire 104 soit via la colonne 104a, soit via la colonne 104b.

Un deuxième mode est un mode vocal dans lequel la requête 420 est soit identique au mode précédent, soit ne comporte, pour le champ 423, qu'un identifiant de service. Dans ce mode l'identifiant 421 est un numéro de téléphone.

Une fois produit, le message 420 est émis vers le serveur 101. On passe à une étape 315 de réponse du serveur 101 à une requête 420 de récupération.

Dans l'étape 315, le serveur 101 utilise le contenu du champ 423 pour déterminer quel est le contenu multimédia qui doit être émis en réponse à la requête 420. Cela est aisé car soit la requête 420 comporte une adresse au format de celle enregistrée dans la colonne 104b, soit le message 420 comporte un identifiant de service. Il est donc aisé de déterminer une ligne de la mémoire 104. Dans la variante préférée, le contenu du champ 423 est comparable au contenu de la colonne 104b. Le contenu 423 est donc une adresse associée à un contenu multimédia par le serveur 101. Cette adresse permet de déterminer de manière certaine une ligne de la mémoire 104. Une fois cette ligne déterminée, le serveur 101 est en possession du contenu multimédia, via la colonne 104c, qui doit faire l'objet de la réponse à la requête de récupération.

Si on est en mode WAP/GPRS, la réponse est, par exemple, un message MMS, un fichier HTML/WML, un fichier voiceXML, ou un autre format compatible avec les contenus multimédia existant sur Internet. Le serveur 101 se comporte alors comme un serveur HTTP/WTP, ou un serveur MMS.

Si on est en mode vocal, cela signifie que le contenu multimédia diffusé est sonore. Dans ce mode le serveur 101 utilise le contenu du champ 421 pour appeler en mode vocale le terminal 111. Une fois la communication vocale établie, le serveur 101 émet un signal sonore correspondant au contenu multimédia spécifié par le contenu du champ 412. L'utilisateur du terminal 111 est donc appelé par le serveur 101 se comportant comme une boite vocale. Dans une variante, ce n'est pas le serveur 101 qui rappelle le terminal 111, mais le terminal 111 qui appelle le serveur 101 qui là encore se comporte comme une boîte vocale.

Dans une variante, le serveur effectue un test sur la valeur du champ 421 pour déterminer si l'utilisateur identifié par cette valeur a le droit de recevoir le contenu multimédia.

On note que dans l'invention, le fait de récupérer un contenu multimédia ne provoque pas l'effacement de ce contenu du serveur 101, comme ce serait le cas pour un serveur de messagerie. L'effacement d'un service/contenu multimédia sur le serveur 101 se fait soit parce que la durée de vie du service a expiré, soit sur intervention expresse du partenaire ayant créé le message. L'entité gérant le serveur 101 a bien sûr toute latitude pour effacer un service.

De l'étape 315 on passe à une étape 316 dans laquelle le terminal 111 finalise la récupération du contenu multimédia en déterminant si la récupération du contenu multimédia s'est bien déroulée. Il s'agit en fait de déterminer si le message de réponse à la requête 420 a bien été reçu.

Dans le cas du mode WAP/GPRS, les protocoles mis en oeuvre comporte leur propre mécanisme d'acquittement de trame qui permet de déterminer si une communication s'est bien déroulée. Dans le cas d'une bonne communication, le terminal 111 émet vers le serveur 101 un acquittement positif. Sinon le terminal 111 soit retourne à l'étape 314, soit abandonne la tentative de récupération après un certain nombre d'essais infructueux. En cas d'échec le terminal 111 émet un acquittement négatif vers le serveur 101. L'envoi d'un acquittement correspond à une étape 317.

Dans le cas du mode vocal, le simple fait qu'il y ait un décroché lors de l'appel du serveur 101 est en soi un acquittement positif.

De l'étape 317, on passe à une étape 318 d'interprétation du contenu multimédia. L'étape 318 a lieu dans le cas du mode WAP/GPRS. Dans l'étape 318, le terminal 111 interprète le contenu multimédia selon le format de ce contenu. Pour cette interprétation le terminal 111 se comporte en fait comme un navigateur WAP/HTML, ou un interpréteur de MMS.

De l'étape 317 on, passe aussi à une étape 319 de traitement des acquittements par le serveur 101. Un message d'acquittement comporte un champ identifiant le service auquel il se réfère, et un champ indiquant si il s'agit d'un acquittement positif ou négatif. En cas d'acquittement positif, le serveur 101 utilise l'identifiant de service pour déterminer la ligne de la table 104 dont les statistiques doivent être mises à jour. Cette mise à jour consiste en une augmentation d'une unité du compteur de la colonne 104d, et en l'insertion dans la liste de la colonne 104f d'un identifiant du client ayant émis la requête 420. Dans une variante ces mises à jour sont faites dès la réception de la requête 420, sans attendre un acquittement.

Le serveur 101 de diffusion de contenu multimédia diffuse des contenus multimédia sur un réseau de téléphonie, et à destination de terminaux de téléphonie mobile. Cependant l'enseignement de l'invention peut être étendu à d'autre terminaux, ordinateur par exemple, recevant des contenus multimédia via au moins un réseau de téléphonie.

Dans la pratique un contenu multimédia enregistré dans la colonne 104c est à un format directement interprétable par un terminal se connectant au serveur 101. Lors de la configuration du serveur 101 par le serveur 119, si le format n'est pas correct, le serveur 101 effectue une conversion de format. De telles conversion sont connues dans le domaine de la téléphonie mobile, notamment entre les langages HTML et WML.

Avec le procédé selon l'invention, il est possible de diffuser un contenu multimédia à plusieurs terminaux en émettant un seul message court de diffusion.

Avec le procédé selon l'invention, il est aussi possible de diffuser plusieurs contenus multimédia avec un même et seul message court de diffusion. En effet un utilisateur d'un terminal peut sauvegarder dans une mémoire le message court de diffusion. Ainsi il est possible à cet utilisateur de se connecter à volonté au serveur 101. Le partenaire de l'entité gérant le serveur 101 a toute latitude pour modifier le contenu multimédia associé audit message court. Dans ce cas il est possible que d'une connexion à la suivante, l'utilisateur ne récupère pas le même contenu multimédia. Cela revient à changer le contenu multimédia associé à une adresse.

Avec le procédé selon l'invention on peut diffuser des contenus multimédia hébergés par n'importe quel serveur joignable par le réseau Internet. En effet, les champs de la colonne 104b peuvent contenir une adresse URL, donc adresser tout le réseau Internet.

## Revendications

1. Procédé de diffusion de contenus multimédia à des terminaux mobiles **caractérisé en ce qu'**un serveur de diffusion de contenus multimédia met en oeuvre les étapes suivantes:
- stockage (305) dans une mémoire de contenus d'au moins un contenu multimédia,
- attribution (306) d'un identifiant de service à chaque contenu multimédia stocké,
- association (303) à chaque identifiant de service d'au moins un identifiant d'une zone géographique,
- pour un contenu multimédia, production (307) d'au moins un message de diffusion, et diffusion de ce message à la zone géographique associée au contenu multimédia, le message court de diffusion comportant un identifiant/adresse associé au contenu multimédia, et l'identifiant de service.

2. Procédé selon la revendication 1, **caractérisé en ce que** le contenu multimédia est obtenu via un message (401) de configuration émis par un serveur d'un distributeur de contenus multimédia, le message de configuration comportant au moins un code (404) instruction de mise à jour, et un contenu (405) multimédia.

3. Procédé selon l'une des revendications 1 ou 2, **caractérisé en ce que** l'association d'une zone géographique et d'un contenu multimédia est mise à jour suite à la réception par le serveur de diffusion d'un message de configuration comportant une association d'un contenu multimédia et d'une adresse (403) d'une zone géographique.

4. Procédé selon l'une des revendications 1 à 3, **caractérisé en ce que** le serveur de diffusion met aussi en oeuvre les étapes suivantes:
- réception (315) d'une requête de récupération d'un contenu multimédia, la requête de récupération comportant un identifiant de l'origine de la requête, et un identifiant de contenu multimédia,
- production (315) d'un message de réponse comportant le contenu multimédia,
- émission (315) du message de réponse vers l'équipement identifié par l'identifiant de l'origine de la requête.

5. Procédé selon la revendication 4, **caractérisé en ce que** le serveur de diffusion incrémente un compteur (104d) associé à un contenu multimédia pour chaque requête de récupération du contenu multimédia.

6. Procédé selon l'une des revendications 4 ou 5, **caractérisé en ce que** le serveur de diffusion met à jour une liste (104f) de clients, ladite liste étant associée à un identifiant de contenu multimédia, à chaque fois qu'un client émet une requête de récupération dudit contenu multimédia.

7. Procédé selon l'une des revendications 1 à 6, **caractérisé en ce que** un message court de diffusion (410) comporte au moins un champ (411) pour que le traitement du message court de diffusion soit attribué à une application spécifique sur un terminal mobile destinataire du message court de diffusion.

8. Procédé selon l'une des revendications 1 à 7, **caractérisé en ce que** le serveur de diffusion met aussi en oeuvre les étapes suivantes:
- réception d'un message de récupération de statistiques, le message de récupération comportant un identifiant d'un contenu multimédia et un identifiant de l'équipement à l'origine de message de récupération,
- production d'un message de réponse comportant des statistiques associées à l'identifiant de contenu multimédia,
- émission du message de réponse vers l'équipement identifié par l'identifiant de l'origine du message de récupération.

9. Procédé de diffusion de contenus multimédia à des terminaux mobiles **caractérisé en ce qu'**un terminal mobile met en oeuvre les étapes suivantes:
- réception (310) d'un message court comportant un code instruction de traitement correspondant à une diffusion d'un contenu multimédia, un identifiant de service et un identifiant/adresse d'un contenu multimédia,
- détermination (312) de la pertinence du message court reçu en fonction de l'identifiant de service et d'une mémoire de configuration du terminal mobile,
- si le message est pertinent, production (314), à partir de l'identifiant/adresse du contenu multimédia, d'une requête de récupération du contenu multimédia, émission de la requête de récupération, puis traitement de la réponse à la requête de récupération.

10. Procédé selon l'une des revendications 1 à 9, **caractérisé en ce que** la réponse à une requête de récupération d'un contenu multimédia est un message de type MMS.

11. Procédé selon l'une des revendications 1 à 9, **caractérisé en ce que** la réponse à une requête de récupération d'un contenu multimédia est un appel automatique du terminal ayant requis le contenu multimédia, le contenu multimédia étant diffusé durant cet appel.

12. Dispositif de diffusion de contenus multimédia à des terminaux mobiles **caractérisé en ce qu'**il comporte:
- des moyens (104) pour enregistrer au moins un contenu multimédia à diffuser,
- des moyens (103a, 104a) pour associer un identifiant de service à chaque contenu multimédia stocké,
- des moyens (103a, 104e) pour associer à chaque identifiant de service au moins un identifiant d'une zone géographique,
- des moyens (103, 105) pour diffuser des messages courts de diffusion au sein d'une zone géographique associée au contenu multimédia, un message court de diffusion comportant un identifiant/adresse associé au contenu multimédia, et l'identifiant de service,
- des moyens (103d) pour émettre des messages courts de diffusion produits.

## Patentansprüche

1. System zur Rundsendung von Multimediainhalten zu mobilen Endgeräten, **dadurch gekennzeichnet, dass** ein Server zur Rundsendung von Multimediainhalten die folgenden Schritte durchführt:
- mindestens ein Multimediainhalt wird in einem Inhalte-Speicher gespeichert (305),
- eine Dienstkennung wird jedem gespeicherten Multimediainhalt zugewiesen (306),
- jeder Dienstkennung wird mindestens eine Kennung eines geografischen Bereichs zugeordnet (303),
- für einen Multimediainhalt wird mindestens eine Rundsendenachricht erzeugt (307) und diese Nachricht wird zu dem dem Multimediainhalt zugeordneten geografischen Bereich rundgesendet, wobei die Rundsende-Kurznachricht eine dem Multimediainhalt zugeordnete Kennung / Adresse und die Dienstkennung enthält.

2. Verfahren nach Anspruch 1, **dadurch gekennzeichnet, dass** der Multimediainhalt über eine Konfigurationsnachricht (401) erhalten wird, welche durch einen Server eines Rundsenders von Multimediainhalten gesendet wird, wobei die Konfigurationsnachricht mindestens einen Aktualisierungsbefehl-Code (404) und einen Multimediainhalt (405) enthält.

3. Verfahren nach einem der Ansprüche 1 oder 2, **dadurch gekennzeichnet, dass** die Verbindung eines geografischen Bereichs und eines Multimediainhaltes aktualisiert wird, nachdem durch den Rundsende-Server eine Konfigurationsnachricht empfangen wurde, welche eine Verbindung eines Multimediainhaltes und einer Adresse (403) eines geografischen Bereichs enthält.

4. Verfahren nach einem der Ansprüche 1 bis 3, **dadurch gekennzeichnet, dass** der Rundsende-Server ebenfalls die folgenden Schritte durchführt:
- Empfangen (315) einer Anfrage zur Wiedergewinnung eines Multimediainhaltes, wobei die Wiedergewinnungsanfrage eine Kennung des Ursprungs der Anfrage und eine Multimediainhalt-Kennung enthält,
- Erzeugen (315) einer Antwortnachricht, welche den Multimediainhalt enthält,
- Senden (315) der Antwortnachricht zur durch die Kennung des Ursprungs der Anfrage identifizierten Einrichtung.

5. Verfahren nach Anspruch 4, **dadurch gekennzeichnet, dass** der Rundsende-Server für jede Anfrage zur Wiedergewinnung des Multimediainhaltes einen einem Multimediainhalt zugeordneten Zähler (104d) inkrementiert.

6. Verfahren nach einem der Ansprüche 4 oder 5, **dadurch gekennzeichnet, dass** jedes Mal, wenn ein Client eine Anfrage zur Wiedergewinnung des genannten Multimediainhaltes sendet, der Rundsende-Server eine Client-Liste (104f) aktualisiert, wobei die genannte Liste einer Multimediainhalt-Kennung zugeordnet ist.

7. Verfahren nach einem der Ansprüche 1 bis 6, **dadurch gekennzeichnet, dass** eine Rundsende-Kurznachricht (410) mindestens ein Feld (411) enthält, damit die Verarbeitung der Rundsende-Kurznachricht einer spezifischen Anwendung auf einem mobilen Endgerät zugewiesen wird, welches Empfänger der Rundsende-Kurznachricht ist.

8. Verfahren nach einem der Ansprüche 1 bis 7, **dadurch gekennzeichnet, dass** der Rundsende-Server ebenfalls die folgenden Schritte durchführt:
- Empfangen einer Nachricht über die Wiedergewinnung von Statistiken, wobei die Wiedergewinnungsnachricht eine Kennung eines Multimediainhaltes und eine Kennung der Einrichtung enthält, von welcher die Wiedergewinnungsnachricht ausgeht,
- Erzeugen einer Antwortnachricht, welche Statistiken enthält, die der Multimediainhalt-Kennung zugeordnet sind,
- Senden der Antwortnachricht zu der von der Kennung des Ursprungs der Wiedergewinnungsnachricht identifizierten Einrichtung.

9. Verfahren zur Rundsendung von Multimediainhalten zu mobilen Endgeräten, **dadurch gekennzeichnet, dass** ein mobiles Endgerät die folgenden Schritte durchführt:
- Empfang (310) einer Kurznachricht, welche einen Verarbeitungsbefehl-Code, welcher einer Rundsendung eines Multimediainhaltes entspricht, eine Dienstkennung und eine Kennung / Adresse eines Multimediainhaltes enthält,
- Bestimmen (312) der Relevanz der empfangenen Kurznachricht in Abhängigkeit der Dienstkennung und eines Konfigurationsspeichers des mobilen Endgerätes,
- wenn die Nachricht relevant ist, Erzeugen (314) - von der Kennung / Adresse des Multimediainhaltes aus - einer Anfrage zur Wiedergewinnung des Multimediainhaltes, Senden der Wiedergewinnungsanfrage, anschließend Verarbeiten der Antwort auf die Wiedergewinnungsanfrage.

10. Verfahren nach einem der Ansprüche 1 bis 9, **dadurch gekennzeichnet, dass** die Antwort auf eine Anfrage zur Wiedergewinnung eines Multimediainhaltes eine Nachricht des MMS-Typs ist.

11. Verfahren nach einem der Ansprüche 1 bis 9, **dadurch gekennzeichnet, dass** die Antwort auf eine Anfrage zur Wiedergewinnung eines Multimediainhaltes ein automatischer Ruf des Endgerätes ist, welches den Multimediainhalt angefordert hat, wobei der Multimediainhalt während dieses Rufs rundgesendet wird.

12. Vorrichtung zur Rundsendung von Multimediainhalten zu mobilen Endgeräten, **dadurch gekennzeichnet, dass** sie Folgendes enthält:
- Mittel (104), um mindestens einen rundzusendenden Multimediainhalt zu speichern,
- Mittel (103a, 104a), um jedem gespeicherten Multimediainhalt eine Dienstkennung zuzuordnen,
- Mittel (103a, 104e), um jeder Dienstkennung mindestens eine Kennung eines geografischen Bereichs zuzuordnen,
- Mittel (103, 105), um Rundsende-Kurznachrichten innerhalb eines dem Multimediainhalt zugeordneten geografischen Bereichs, wobei eine Rundsende-Kurznachricht eine dem Multimediainhalt zugeordnete Kennung / Adresse enthält, und die Dienstkennung rundzusenden,
- Mittel (103d), um erzeugte Rundsende-Kurznachrichten zu senden.

## Claims

1. A method for the broadcasting of multimedia contents to mobile terminals wherein a server for the broadcasting of multimedia contents implements the following steps:
- the storage in a contents memory of at least one set of multimedia contents,
- the assigning of a service identifier to each set of stored multimedia contents,
- the association with each service identifier of at least one identifier of a geographical zone,
- for a set of multimedia contents, the production of at least one broadcasting message, and the broadcasting of this message to the geographical zone associated with the multimedia contents, the short broadcast message comprising an identifier/address associated with the multimedia contents and the service identifier..

2. A method according to claim 1, wherein the multimedia contents are obtained through a configuration message sent out by a server of a distributor of multimedia contents, the configuration message comprising at least one updating instruction code and a set of multimedia contents.

3. A method according to one of the claims 1 or 2, wherein the association of a geographical zone and of a set of multimedia contents is updated following the reception, by the broadcasting server, of a configuration message comprising an association of a set of multimedia contents and an address of a geographical zone.

4. A method according to one of the claims 1 to 3, wherein the broadcasting server also implements the following steps :
- the reception of a request for the retrieval of a set of multimedia contents, the retrieval request comprising an identifier of the origin of the request and an identifier of multimedia contents,
- the production of a response message comprising the multimedia contents,
- the sending of the response message to the equipment identified by the identifier of the origin of the request.

5. A method according to claim 4, wherein the broadcasting server increments a counter associated with a set of multimedia contents for each request for the retrieval of the multimedia contents.

6. A method according to one of the claims 4 or 5, wherein the broadcasting server updates a list of customers, said list being associated with an identifier of multimedia contents whenever a client sends out a request for retrieval of said multimedia contents.

7. A method according to one of the claims 1 to 6, wherein a short broadcast message comprises at least one field so that the processing of the short broadcast message is assigned to an specific application on a mobile terminal that is a destination of the short broadcast message.

8. A method according to one of the claims 1 to 7, wherein the broadcasting server also implements the following steps:
- the reception of a statistics retrieval message, the retrieval message comprising an identifier of a set of multimedia contents and an identifier of the equipment from which the retrieval message originates,
- the production of a response message comprising statistics associated with the identifier of the multimedia contents,
- the sending of the response message to the equipment identified by the identifier of the origin of the retrieval message.

9. A method for the broadcasting of multimedia contents to mobile terminals wherein a mobile terminal implements the following steps:
- the reception of a short message comprising a processing instruction code corresponding to a broadcasting of a set of multimedia contents, a service identifier and an identifier/address of a set of multimedia contents,
- the determining of the relevance of a short message received as a function of the service identifier and a configuration memory of the mobile telephone,
- if the message is relevant, the production, from the identifier/address of the multimedia contents, of a request for the retrieval of the multimedia contents the sending of the retrieval request and then the processing of the response to the retrieval request.

10. A method according to one of the claims 1 to 9, wherein the response to a request for the retrieval of a set of multimedia contents is an MMS type message.

11. A method according to one of the claims 1 to 9, wherein the response to the request for the retrieval of a set of multimedia contents is an automatic call from the terminal that has requested the multimedia contents, the multimedia contents being broadcast during this call.

12. A device for the broadcasting of multimedia contents to mobile terminals, comprising:
- means for the recording of at least one set of multimedia contents to be broadcast,
- means to associate a service identifier with each set of stored multimedia contents,
- means to associate at least one identifier of a geographical zone with each service identifier,
- means for broadcasting short broadcast messages within a geographical zone associated with the multimedia contents, a short broadcast message comprising an identifier/address associated with the multimedia contents, and the service identifier,
means to send short broadcast messages produced.
